# EUROPEAN PATENT SPECIFICATION

(11) **EP 1 589 852 B1**
(45) Date of publication and mention of the grant of the patent: **02.07.2008**
(21) Application number: 04708537.8
(22) Date of filing: 05.02.2004
(51) Int. Cl.: A47B 47/00

(54) **STAND AND STAND SYSTEM**
GESTELL UND GESTELLSYSTEM
MEUBLE A ETAGERES ET SYSTEME DE MEUBLE A ETAGERES

(30) Priority: 05.02.2003 SE 0300295
(43) Date of publication of application: 02.11.2005
(73) Proprietor: Ericsson, Rolf, S-448 34 Floda (SE)
(72) Inventor: Ericsson, Rolf, S-448 34 Floda (SE)
(74) Representative: Johansson, Lars-Erik
(86) International application number: PCT/SE2004/000149
(87) International publication number: WO 2004/069003

(56) References cited:
- DE-U1- 29 901 932
- US-A- 2 065 133

## Description

### TECHNICAL FIELD

This invention relates to a stand and a stand system. The stand consists of at least one shelf that is divided in a first part and a second part where a fastening device connects said parts and in such a way that there is a gap between said parts.

### PRIOR ART

When a stand shall be mounted there are different systems to choose. There are systems consisting of ready made modules with different heights, lengths and breadths that can be assembled to a stand with certain variation possibilities. The different sizes of the modules make it possible for the stand to get a varied appearance depending on the current need.

There is also the possibility of building a stand, where each shelf, gable and breadth, depth and height can be custom-made.

The disadvantage with known modular systems that can be assembled is that the of variation possibilities are limited. The completed modules finally determines the breadth, height and depth on the stand. When different breadths, heights and depths are required in one stand, this may be difficult to obtain. Although the modules are completed, a lot of tools are often required to complete a stand consisting of modules.

A stand that is built of parts that are custom-made requires a great portion of craftsmanship and it also requires a variety of tools during the assembly. The period of time for completing such a stand will be rather long, and hence its price will be relatively high. Dismounting of such a stand also requires tools and is time wasting.

The problem is consequently that if one wants to custom-make a stand, known completed module systems are either inadequate and/or requires a lot of tools to obtain such a stand, and/or require a great portion of craftsmanship. No standardized system is available. The conclusion is that there is no simple, elegant and flexible system for stands, which requires a minimum of tools for the assembly and which is possible to obtain to a reasonable price.

In the patent document US 5,740,926 a stand is shown, which makes it possible to adjust and push book-supports along a gap in a shelf. These flexible book supports do not thus replace the gables to each shelf, but they only are a complement for each shelf. Moreover, this stand shows similar disadvantages as described above.

In the patent document DE 4301290 a mountable system of stands is shown. The shelves are provided with holes in each end and the gable sides have notches in which the shelves may be inserted. When the stand has been assembled, locking pins are inserted in the holes and the gables may be raised so that a locking is achieved. The current system is not specially flexible because the possibility of changing the appearance of the stand is minimal.

In US-A-2 065 133 a stand with two shelf parts is disclosed.

### DISCLOSURE OF THE INVENTION

The purpose of this invention is to eliminate or at least minimize the problems mentioned above, which is achieved by means of a stand comprising at least one shelf divided in a first part and a second part, wherein a fastening device connects said parts and in such a way that there is a gap between said parts, wherein said fastening device is arranged alongside said gap and constitutes a gap portion of said gap.

Thanks to the invention a stand is achieved, which is very variable and which may be assembled by using a minimum of tools and which gives a stable stand construction. The great advantage of the invention is the great flexibility. Each shelf may be provided with gables, which may be placed in the most suitable position, the depth of the shelves may be varied and the height of the gables may be extended.

According to further advantageous aspects of the stand according to present invention, the locking between stand gables and shelves may be hidden but still be easy to reach at assembly and disassembly. A good stability is achieved with a stand according to the present invention because the shelves may be arranged so that they rest upon the stand gables. It is easy to dismount the stand and to change its appearance. Different materials may easily be combined in one stand.

An additional advantage with present invention is that the design of the system according to a preferred aspect makes the front and the back of the stand look the same and therefore a stand can be placed standing by itself and not necessarily against a wall.

According to additional aspects on the invention:
- the fastening device consists of an elongated profile element provided with locking means which connect respective stand part with the fastening device through corresponding notches in respective stand part. The advantage with this is that a stable locking is achieved between stand part and fastening device and that rational production is possible;
- the fastening device runs parallel with said gap portion so that the fastening device may be pushed in to said notch preferably without tools, whereby connection is established between the fastening device and the stand part. The advantage is that the fastening device and the gap portion are positioned adjacent to the stand part and that the connection is established preferably without tools;
- the gap runs along the longitudinal direction of the shelf. The advantage is that the gap is available along the shelf;
- said fastening device is provided with a gap portion extending upwards and a gap portion part extending downwards. The advantage is that the gap portion is accessible both on an underside and an upper side of a shelf;
- the fastening device is symmetrical with regard to a horizontal plane and a vertical plane. The advantage is cheaper production and easier mounting of the fastening device;
- said gap portion is provided with means for interaction with said locking device. The advantage is that the locking device may interact with the gap portion along the length of the gap portion;
- said means constitutes of edge means extending parallel with the gap. The advantage is that the edge means gives a good interaction with a locking device and is simple to integrate in the production;
- the stand includes, in relation to said shelves, a transverse stand element which shows means for interacting with a locking device so that the stand element may be connected to the shelf. The advantage is that the means of the transverse stand element make it possible to connect the stand element with the shelf so that a stand may be assembled:
   - torque protection means are arranged in said gap portion and interact with said stand element so that a torque-proof connection is achieved. The advantage is that through the torque protection means the transverse stand elements are torque-proof connected to the gap portion and the shelf;
   - said torque protection means constitutes of at least one pin-shaped component, preferably at least two. The advantage with pins is that they are easy to mount, and that they also fit into to the already existing gap portion;
   - said locking device includes a rod-shaped part penetrating a notch in said transverse stand element, whereby said stand element in the area of said notch shows an abutment surface transmitting a pressing force, which through a locking device is beset through the rod-shaped part. The advantage is that a good locking of the transverse stand element is obtained by means of the locking device.
   - said transverse stand element is a module element. The advantage is that the transverse stand elements are flexible and may have the desired breadth and also height and even height, if required;
   - at least some of said stand parts is provided with a first coupling at a long side so that a supplementary board may be arranged to the long side of said stand part, whereby the breadth of said shelf may be varied as desired;
   - said locking device is arranged to an attachment frame constituting a part of a gable element. The advantage with this is that by using of an attachment frame a good manageability upon locking and also a good flexibility and stability in the locking between the locking device and the gable element is achieved;
   - the gable element constitutes of sub-elements. The advantage is that high flexibility is achieved when the gable element is assembled;
   - a gauge block may be arranged to the short side of a shelf, whereby said gauge block has a breadth that preferably is the half the breadth (t) of a gable element. The advantage is that the gauge block may hide the locking device and at the same time constitute a structural unit, which may be compensated in the direction of length, breadth and height.

### SHORT DESCRIPTION OF DRAWINGS

The invention will be described in greater detail referring to the figures, of which:
- Fig. 1: shows an embodiment of a stand according to the invention;
- Fig. 2: shows in a cross-sectional view a detailed enlargement of a gable element arranged to a shelf in area A in Fig. 1;
- Fig. 2a: shows in a cross-sectional view a detailed enlargement of two gable elements attached to a shelf in area B in Fig. 1;
- Fig. 2b: shows in a cross-sectional view the gable element according to Fig. 2 attached to a shelf;
- Fig. 2c: shows in a cross-sectional view a detailed enlargement of two gable elements attached to ajoint between two shelves in the area D in Fig. 1;
- Fig. 2d: shows in a cross-sectional view an alternative embodiment of two gable elements attached to a shelf with a plug attached to an end;
- Fig. 3: shows in an end view a fastening device;
- Fig. 4: shows in a perspective side view the fastening device in Fig. 3;
- Fig. 5: shows in a perspective end view two stand parts next to each other with a notch intended for the fastening device;
- Fig. 6: shows in an end view two stand parts with the fastening device attached to the notch in the stand parts;
- Fig. 7: shows in a perspective side view from the short end how shelf parts and supplementary boards together form a shelf;
- Fig. 8: shows an alternative embodiment of a stand in accordance with the invention;
- Fig. 9: shows in a plane view how a gable element is put together by parts.
- Fig. 10: shows in a side view an attachment frame intended to be arranged to a gable element;
- Fig. 11: shows in a top view the attachment frame intended to be arranged to a gable element;
- Fig. 12: shows in a top view how the attachment frame is attached to a gable element;
- Fig. 13: shows in a cross-sectional view how the attachment frame in the gable element is locked to a fastening device in a stand part by means of a screw;
- Fig. 13a: shows in an end view how the attachment frame in Fig. 13 has been attached to the shelf and the screw has been inserted in the fastening device as to keeping the attachment frame and the gable element in position;
- Fig. 14: shows in a side view a cover plate, which is provided on the attachment frame;
- Fig. 15: shows in a perspective side view a gauge block;
- Fig. 16: shows in a perspective side view how a gauge block is attached to the end of a shelf and to the short side on a gable element;
- Fig. 17: shows in a side view shelves mounted in a suspension device; and
- Fig. 18: shows in an end view how two shelves are attached to axes in a strut and locked with a fastening device.

### DETAILED DESCRIPTION

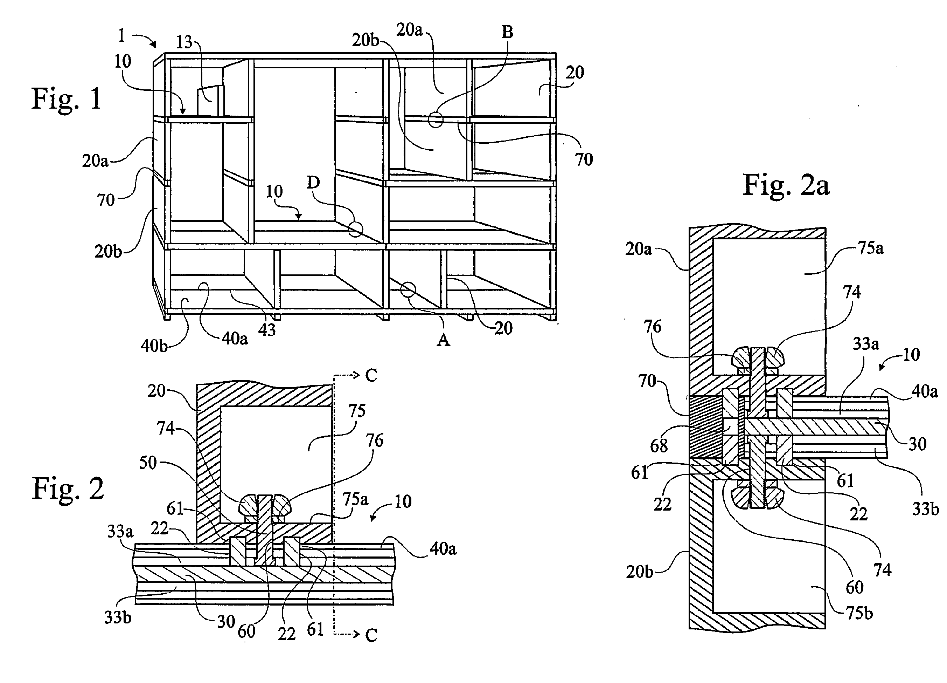

Fig. 1 shows an example of a preferred embodiment of a stand 1 according to the invention. The stand 1 according to this embodiment has shelves 10 and gable elements 20. A book support 13 is arranged in a shelf 10. Because of the flexibility of this invention a gable element 20 and a book support 13 can be provided along the length of a shelf 10, wherever desired.

The gable elements 20 in this embodiment consist of elements with a fixed height. If a higher gable height is wanted for a specific shelf 10, this may be achieved by placing gable elements 20 on top of each other.

Through variation of the height and breadth of the gable elements as well as of the length and breadth of the shelves, a stand can be custom-made by means of of this invention according to current needs. Gauge blocks 10 may be added in order to compensate vertically and longitudinally

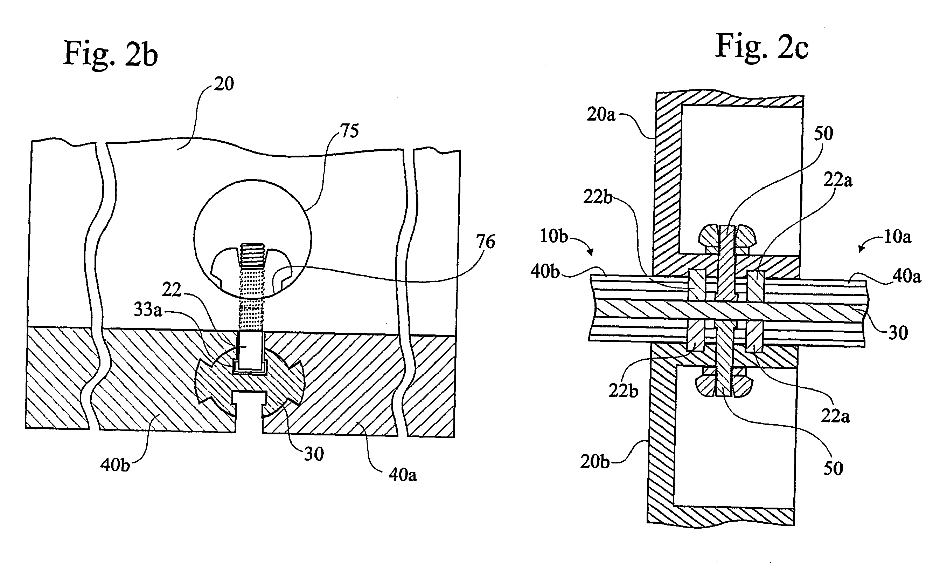

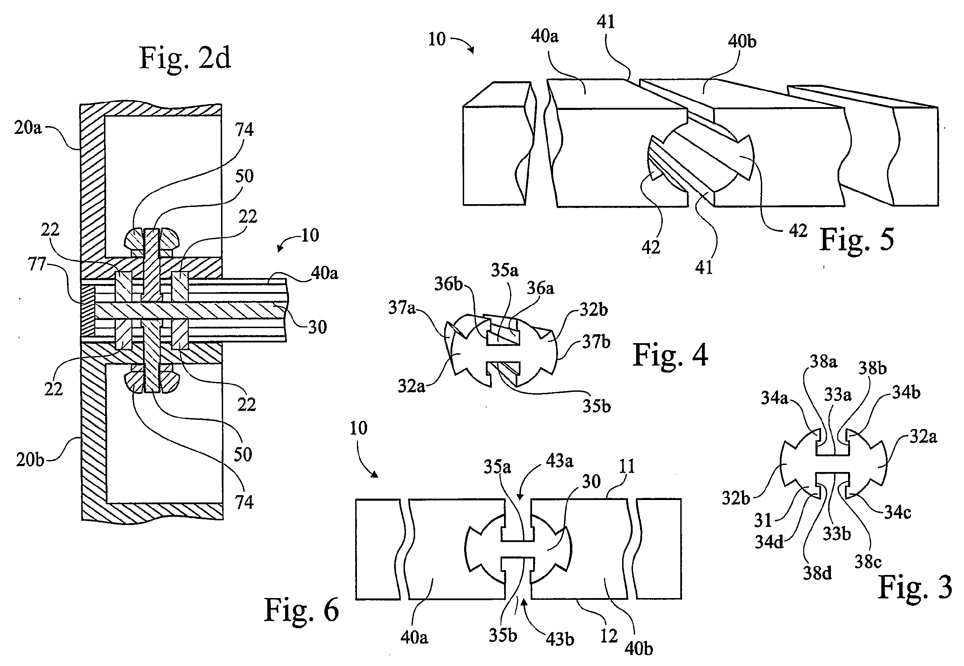

Fig. 2 shows in a vertical cross-sectional view the area A in Fig. 1. Here the gable element 20 is attached on top of stand part 40a. In the gable element 20 there is a notch 75. Two holes 61 are provided on the underside of the gable elements 20 and also a through hole 60, extending from the notch 75 to the underside of the gable element. There is an abutment surface 76 in the notch 75. The hole 60 is situated between said holes 61. A fastening device 30 is arranged horizontally to the long side of the stand part 40a. Notches 33a, 33b are arranged in said fastening device 30, and they run in the longitudinal direction of said fastening device.

Pegs 22 are arranged in the holes 61. These pegs extend into the notch 33a in the fastening device 30. A screw 50 is arranged in the through-hole 60, which screw extends down in to the notch 33a in the fastening device. Through the shape of the bottom part of the screw 50 a locking of the screw in the notch 33a is achieved. A wing-nut 74 is arranged in the uppermost portion of the screw 50. By tightening the wing-nut 74 one can lock the gable element 20 to the fastening device 30 and when the fastening device is provided in the stand part 40a a locking to the shelf 10 is also achieved. The pegs 22 stabilize the locking additionally by preventing the gable element 20 from displacement breadth direction of the shelf 10.

Fig. 2a shows in a vertical cross-sectional view the area B in Fig. 1. Here is shown how two vertical gable elements 20a, 20b are attached to a horizontal stand part 40a as well as the fastening device 30 and a horizontal gauge block 70. The gable element 20a and the fastening device 30 are identical with the gable element 20 and the fastening device 30, respectively, shown in Fig. 2. In the lower part of the gable element 20a there is a notch 75a.

In the gable element 20b there is a notch 75 in the upper part. Two holes 61b are provided in the top side of the gable elements 20b as well as a through-hole 60 extending between the notch 75b and the top side of the gable element 20b. The hole 60 is provided between said holes 61b.

The fastening device 30 is arranged horizontally to long side of the the stand parts 40a. In said fastening device 30, a notch 33a is provided in its topside and a notch 33b in its underside. These notches 33a, 33b run in the longitudinal direction of said fastening device.

The gauge block 70 is arranged between the gable elements 20a, 20b and has a breadth that is half of the breadth of the gable elements 20a, 20b. A vertical hole 68 is provided in the gauge block 70.

The gable element 20b is arranged to the shelf 10 in the following way. Pegs 22 are arranged in the holes 61. One of these pegs extends up into the notch 33b in the fastening device 30. The other peg extends up into the hole 68 in the gauge block 70. In the through-hole 60 the screw 50 is arranged extending up into the notch 33b in the fastening device. Through the design of the screw 50 a locking of the screw in the notch 33bis achieved. On the threaded part of the screw 50 a wing-nut 74 is arranged.

The gable element 20a is arranged to the gauge block 70 as well as to the stand part 40a in the same way as the gable element 20b, i.e. one of the pegs 22 goes down into the hole 68 in the gauge block 70 and the other peg 22 goes down into the notch 33a in the fastening device.

The gauge block 70 is designed in such a way that even the fastening device 30 fits in it. Thereby the gauge block is secured and is kept in place by the gable elements, the fastening device and the stand parts.

By securing the wing-nut 74 on the screw 50, the gable element 20b may be locked to the fastening device 30 and when the fastening device is arranged in the stand part 40a, a locking to the shelf 10 is achieved. The gauge block 70 too is locked in its position. The pegs 22 stabilize the locking even more by preventing the gable element 20 from displacement in the breadth direction on the shelf 10. The pegs 22, that are arranged in the hole 68 in the gauge block 70, prevent the gauge block 70 from displacement breadth direction and longitudinal direction. In this way a locking of the gable elements 20a, 20b to the stand part 40a and the shelf 10 as well as to the gauge block 70 is achieved. The gauge block 70 is arranged to the stand part 40a, i.a. to hide the end and the locking on said stand part.

Fig. 2b shows, in a cross-sectional view along the line C-C in Fig. 2, the gable element 20 arranged to the shelf 10 comprising the stand parts 40a and 40b.

Here it can be seen how the fastening device 30 is arranged between the stand parts 40a and 40b and how the peg 22 together with the screw 50 is arranged in the notch 33a. The notch 75 in the gable element 20 may like in this case consist of a circular notch.

Fig. 2c shows in a vertical cross-sectional view the area D in Fig. 1. Here is seen how the two shelves 10a, 10b in the same level is arranged against one another and how the two vertical gable elements 20a, 20b are arranged above and below, respectively, the joint surface between the two shelf parts 40a and 40b.

The joint between the two stand parts 40a and 40b is preferably arranged in the middle of the breadth of the gable elements 20a, 20b. Thereby the weight of the stand parts 40a and 40b is evenly spread on the gable element 20b and good stability is achieved.

The gable elements 20a, 20b are arranged to the fastening device 30 by means of the screws 50 and the pegs 22a and 22b. The gable elements 20a, 20b are as shown in Fig. 2a.

Fig. 2d shows in a vertical cross-sectional view an alternative embodiment of how two gable elements 20a, 20b are arranged to a stand part 40. In this embodiment, the gauge block 70 is excluded and instead said gable elements and all their pegs 22 are arranged in the fastening device 30. To hide the end of the fastening device 30 a peg 77 is arranged to the stand part 40a. The peg is for example made of the same material as the stand part 40a and has an outer shape that makes it fit to the stand part 40a.

The gable elements 20a, 20b and the fastening device 30 are identical to the gable elements and the fastening device, respectively, shown in Fig. 2a. The locking is achieved by means of screws 50 and wing-nuts 74.

Below said details will be described more thoroughly, and additional alternative embodiments of the invention and its parts will be presented.

Fig. 3 shows a fastening device 30 in a side view from the short side of the fastening device. The fastening device 30 is for example made of aluminium. The fastening device consists of a central body 31, from which two dove-tail-shaped protrusions 32a, 32b are arranged along the diameter of the central body and radially out from said central body. If the fastening device 30 is placed so that the protrusions 32a, 32b are arranged horizontal plane, two notches 33a, 33b will then be arranged in the vertical plane towards the centre of the central body. Closest to the centre of the central body 31 the notches 33a, 33b widen and show in a cross-sectional view a shape that can be compared to the letter T. On each side of the notches 33a, 33b, flanges 34a, 34b, 34c, 34d are created as well as shoulders 38a, 38b, 38c, 38d. The purpose of said flanges and shoulders is to keep a locking device in place, which has been placed in the notches 33a, 33b of the central body. The protrusions 32a, 32b and the notches 33a, 33b run axially along the entire fastening device 30.

Fig. 4 shows the fastening device 30 in a perspective side view. A bottom 35a of the notch 33a is perpendicular to the edges 36a, 36b of said notch. The same is valid for notch 33b.

The protrusions 32a, 32b, which have the shape of dovetails, show outer surfaces 37a, 37b, which are slightly arched.

Fig. 5 shows in a perspective side view part of a shelf 10 which consist of stand parts 40a, 40b. On one long side 41 of each stand part a horizontal recess 42 is made that have the shape of outer surface 37 of the protrusions 37 on a fastening device.

The recess 42 extends all the way along the long side 41 of the stand part 40a, 40b.

Fig. 6 shows in a side view how a fastening device 30 has been inserted from the short side of the stand part 40a, 40b in the recess 42 on the long side of the respective stand part 41. Thereby the fastening device 30 keep the two stand parts 40a, 40b together so that an even shelf 10 is formed, in which shelf a track 43a arises on an upper surface and a track 43b on a bottom surface 12 of said shelf 10.

The bottom of the tracks 43a, 43b consists of the bottom 35a, 35b in the fastening device 30. The breadth of the tracks 43a, 43b are as large as the distance between the flanges 34a, 34b on the fastening device, and therefore a locking device fits into these tracks 43a, 43b. The tracks may, if one wishes, when the stand is completed, be covered with for example a rim that can be placed in the tracks 43a, 43b.

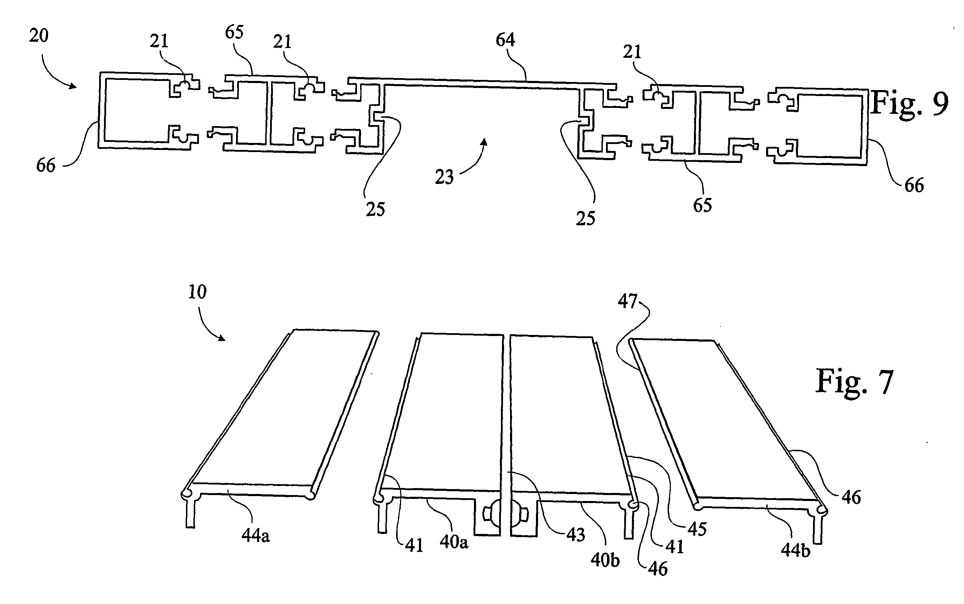

Fig. 7 shows in a perspective side view from the end of the shelf how a shelf 10 may constitute of two shelf parts 40a, 40b on each side of a track 43 between the two shelf parts, in which track a fastening device 30 may be arranged. Further, the shelf 10 may consist of supplementary boards 44a, 44b that may be joined to the shelf parts 40a, 40b along its long sides 41 by means of a coupling 45, which in this case consists of a track 46 in the shelf part 40 and an edge 47 on the supplementary board 44, which edge 47 fits into the track 46. The supplementary board 44 thus has a track 46 on one of the long sides and on the other long side an edge 47. In this way a shelf 10 may be extended by means of supplementary boards outwards from the two centrally placed shelf parts 40. Naturally, this must not to occur symmetrically but different numbers of supplementary boards 40 may be added to the two shelf parts 40.

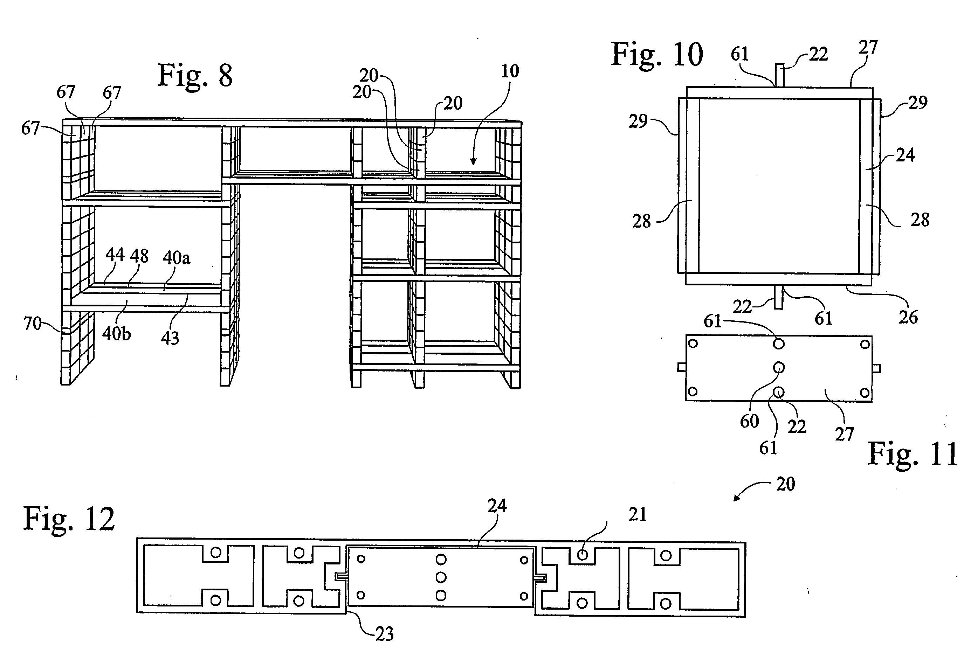

Fig. 8 shows an alternative embodiment of the present invention. In this embodiment, several lower gable elements 20 have been arranged on top of each other for each shelf 10 so that a desired height of the gables has been obtained. Contrary to the embodiment previously shown no gauge blocks are arranged between two gable elements when they are put together to increase the height of a gable for a shelf.

The lower gable elements 20 in the current shown embodiment of the invention may be constructed as shown in previous figure descriptions. They may also be constructed as in following figure descriptions. Naturally, modifications of associated details may be made in order to simplify the assembly.

In the current alternative embodiment shown, each gable element 20 consists of parts 67 which are assembled in the horizontal direction to a gable element 20.

The shelfs 10 consists of shelf parts 40a, 40b and a supplementary board 44. On the shelfs 10 the tracks 43 may be seen between the shelf parts as well as ajoint 48 between shelf part 40a and the supplementary board 44. Also in this embodiment gauge blocks 70 are used.

Fig. 9 shows in a top view such a gable element 20 of the alternative embodiment shown in Fig. 8a. The gable element is intended to be placed under or above a shelf 10 and abuts against said shelf. On the upper side and the underside of the gable element 20 a number of holes are arranged. Lock-pins 78 (not shown) are arranged in the holes 21 which pins keep the parts of the gable element together. A gable element 20 has a standard height of 7 centimetres. Also pegs 22 may be arranged in the holes 21, which extend between two gable elements placed on top of each other. They then stabilize these gable elements. When a higher height is desired for on a gable element 20, several gable elements are placed on top of each other. The gable element 20 becomes narrower in the central portion and forms a space 23 in which an attachment frame 24 can be arranged (not shown). On each side of the space 23 tracks 25 are arranged, which fit into the attachment frame 24.

The upper side of the gable element 20 and the underside of the gable element 20 look the same.

Further, it is showed how said gable element 20 consists of five parts which have been joined together to a gable element. The gable element 20 consist, in the embodiment shown, of a centrally placed central part 64 and on each side thereof a side part 65 each and outside each side part an outer part 66 on each side of the side parts 65. The central part, the side part and the outer part fit together because flanges and notches are provided in the ends of each part, so that they hook on to one another and in that way is kept together. Lock-pins 78 may lock the different parts.

Fig. 10 shows an attachment frame 24 that may be arranged centrally in a gable element 20 in the space 23. The attachment frame 24 consist of a square construction where a bottom 26 and a top 27 consist of identical details and where the sides 28 consist of plates on which a flange 29 is arranged centrally. Holes 61 are arranged in the top 27 and the bottom 26 and pegs 22 fit into these holes.

Fig. 11 shows the attachment frame 24 in a top view. On the top 27, and even on the bottom 26, a through-hole 60 is arranged. On each side of the hole 60, a hole 61 is provided and pegs 22 fit into these holes. The pegs have several functions. They may, like the pegs in the holes of the gable elements 20, lock the next attachment frame, which is placed below or above the attachment frame shown. They may fit into holes in a gauge block, which is arranged in a stand, or they may interact with a fastening device to stabilize a locking.

The hole 60 is intended for the locking device 50 which is arranged in the fastening device 30. The attachment frame 24 can be secured to the locking device 50, whereby the gable element 20 by means of the attachment frame 24 and the locking device 50 is kept in its position.

Fig. 12 shows in a top view how an attachment frame 24 is arranged to a gable element 20 in the central space 23 of said gable element 20. Holes 21 are arranged in the gable element 20. In these holes pegs 22 may be arranged to stabilize a gable if several gable elements would be put on top of each other, which then is an alternative embodiment of the present invention. The location of the holes may be adopted to the holes in a gauge block 70. A peg 22 placed in a hole 21 may thereby also stabilize the connection between a gable element and a gauge block. The gable element 20 may consist of several assembled parts or of only one part, as shown in this figure. The material in the shown gable element 20 consisting of only one part may be wood, for example.

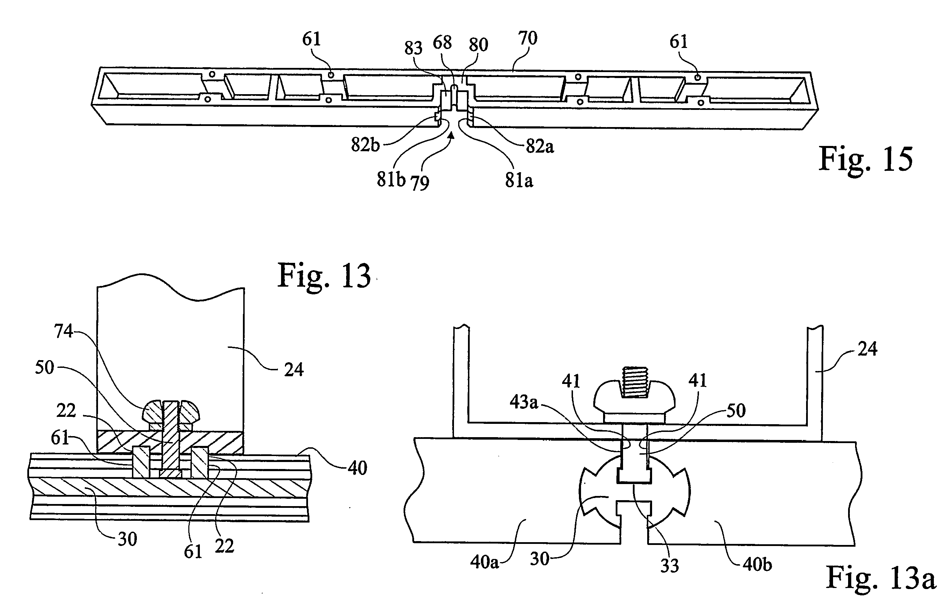

Fig. 13 shows in a cross-sectional view how the attachment frame 24 arranged to the gable element 20 as described in Fig. 12 has been arranged to the shelf part 40 and has been locked with the screw 50, which in one end is locked in the fastening device 30 arranged to the shelf part 40 and whereupon the other part of the screw 50 is locked by means of a wing-nut 74. Further, the two holes 61 can be seen in the attachment frame 24 and how pegs 22 have been arranged into these holes 61 to further control and keep the attachment frame 24 and the gable element 20 in position.

Fig. 13a shows an end view of the attachment frame 24, shown in Fig. 13, arranged to the shelf parts 40a, 40b where the fastening device 30 is arranged between them. Here is shown how the screw 50 is arranged in the track 43a between the long sides 41 of the shelf parts 40a, 40b and in the notch 33 in the fastening device 30.

By means of this locking device 50 the attachment frame 24 and hence the gable element 20 may be locked to a shelf 10. The locking device 50 may consist of for example a screw, that are locked to an attachment frame 24 arranged to a gable element 20. A special point about this locking device is that the gable element is locked in the shelf in a centrally placed locking.

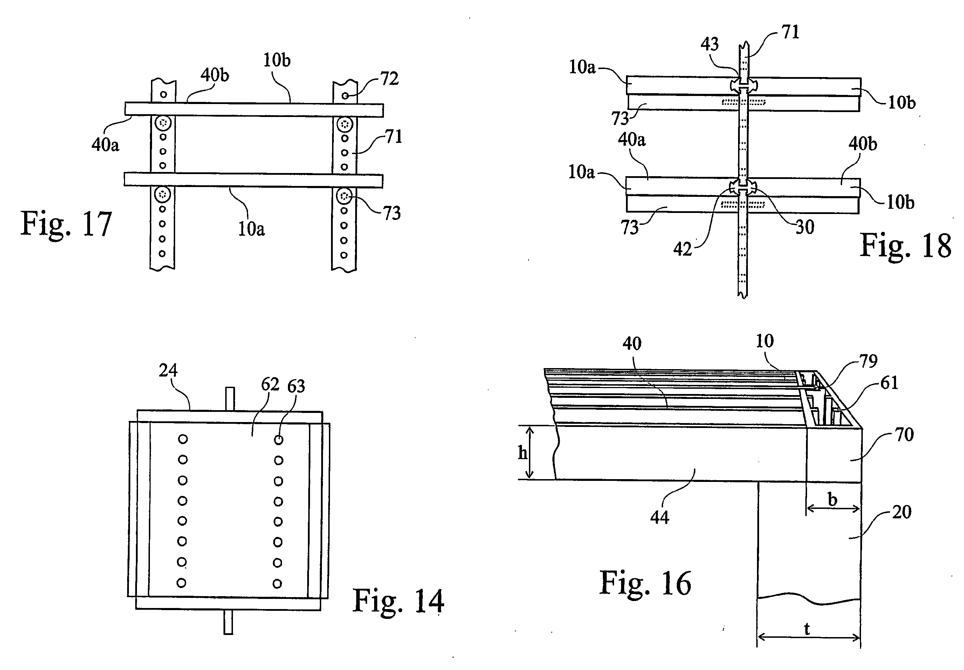

Fig. 14 shows in a side view the attachment frame 24. On the front and back side of the attachment frame 24 a cover plate 62 has been arranged. The locking device 50 which is used to lock a gable element to a shelf 10 is than hidden totally. In the cover plate 62 holes 63 may be arranged in which detachable shelves may be arranged (not shown).

Fig. 15 shows in a perspective side view a gauge block 70 which consists of an elongated piece intended to be placed upon a gable element 20 on the outer edge of a shelf 10 or beside another gauge block 70. The function of the gauge block is to be able to cover the end of a shelf and stabilize it, as well as to constitute a vertical compensation when some of the other gable sections lack shelves.

Centrally on the gauge block 70 a notch 79 is arranged. On the inner vertical part 80 of the notch 79 a hole 68 is arranged. On the vertical side surfaces 81a, 81b of the notch horizontal tracks 82a, 82b are arranged. These tracks 82a, 82b have got the same geometrical appearance as the recesses 42 of a shelf part 40 and as the protrusions 32 of the fastening device 30. The fastening device 30 fit into these tracks 82a, 82b which makes the gauge block stay in its position also by means of the fastening device 30, which may reach all the way to a vertical surface 83 in the notch 79.

In the upper side and underside of the gauge block 70 holes 61 are arranged. Pegs 22 (not shown) fit into these holes 61 whereby the gauge block 70 may be fixed to a gable element 20. Through this fixation the gauge block 70 stays in its position and may then constitute a foundation on which a new gable element 20 may be placed. The new gable element 20 on top of the gauge block 70 and the shelf 10 are locked in the same way with pegs 22 arranged in the hole 61 in the gauge block and the gable element.

A gauge block 70 may also consist of several parts in the same way as a gable element. These parts may fit to one another through form fit and make it possible for a gauge block 70 to be built side by side so that the gauge block fits shelves and gable elements, which have been extended and got increased breadths. In the holes 61 lock-pins 78 (not shown) may also be arranged, which keep together a gauge block consisting of several parts.

Fig. 16 shows how a gauge block 70 has been arranged on top of a gable element 20 on the short side of a shelf 10 which consists of shelf parts 40 and supplementary boards 44. On the top side of the gauge block 70 holes 61 may be seen, in which pegs 22 may be arranged to continue with the next gable element 20, or lock pins may be arranged into these holes. These lock pins keep together a gauge block consisting of several parts. The notch 79 in the gauge block may also be seen. The sizes of a gauge block are preferably as follows. The breadth (b) of the gauge block is preferably half of the breadth (t) of the gable element. The thickness (h) of the shelf part 40 is preferably half of the breadth (t) of the gable element.

Fig. 17 shows in a side view two shelves 10a, 10b which are not arranged on top of gable elements but are arranged to struts 71 instead, which are arranged in a track 43 between the two shelf parts 40a, 40b constituting the shelf 10 itself. Every strut 71 has holes 72 arranged along the entire strut. In these holes 72 an axis 73 may be inserted and fixed. It is on this axis 73 the shelf parts 40 of a shelf 10 rest.

The struts 71 are then fixed in their top edge. A hanging shelf 10 may thereby be achieved.

Fig. 18 shows in a side view how the two shelves 10a, 10b have been arranged on axes 73 arranged to struts 71. In this way, hanging shelves may be obtained, i.e. shelves hanging in the struts 71, and where the struts 71 are attached in their top portions.

The strut 71 passes down through a track 43 between the shelf part 40a and the shelf part 40b. The shelf part 40a rest on the axis 73 which is arranged in a hole 72 of the strut 71. The shelf parts 40a and 40b are kept together by a fastening device 30. The fastening device 30 is arranged in a recess 42 in the shelf parts 40a, 40b. In the embodiment shown, the fastening device 30 is divided into several parts so that the strut may pass down between two fastening devices 30 in the track 43 between the two shelf parts 40a, 40b. If one later wants to place a gable element 20 on top of the shelf this may be locked to the fastening device 30 by means of a locking advice 50.

### Alternative

The invention is not limited to what is shown above but may be varied within the frames of the following patent claims. An expert in the art realizes for example that the exact design of different associated parts may be varied in many ways. Consequently, it should be understood that the materials mentioned may be replaced. Aluminium may be replaced by other suitable materials, for example plastics or other metals, for example steel, brass, copper, etc. It is also conceivable that many of the parts may be made of wood, either wood which is pure wood or only chipboards with wooden laminate on the outer sides.

In the shown embodiments of the invention, the shelf parts 40 and the supplementary board 44, respectively, have a short side with a breadth of 1 to 10 cm, preferably between 4 and 6 cm. This interval has proved to be very practical to work with but may of course vary both upwards and downwards. In the same way, the height of the gable elements is between 1 and 12 cm, preferably between 6 and 8 cm, and the thickness of the shelf between 9 and 30 mm, preferably between 13 and 23 mm. All three measurement intervals are valid for the present invention when made of aluminium. The two last measurement intervals have also proved to be practical to work with but may of course be increased or reduced in order to obtain other advantages. When the shelf parts are made of wood, it has been proved that the shelf parts 40 should have a breadth of the short side of between 20 and 50 cm, preferably between 24 and 45 cm.

The locking device that secures a gable element 20 to a shelf 10 consists of a screw in the shown embodiment of the invention. This screw is locked in the gable element, more closely in an attachment frame 24 by means of a wing-nut. The shown embodiment of a locking device is only of many possible alternatives and locking devices that are not threaded are of course also possible. An example of a different type of locking device is a so called turnable screw, which through a rotation of 90° compared to the angle by which it is inserted into the hole, locks associated parts to each other.

The fastening device 30 of the embodiment shown is made of aluminium. Other materials are of course also conceivable for this element, for example some kind of plastics. The exact design of the fastening device 30 may also be varied in many different ways. The fastening device in the embodiment shown is symmetrical, but may also be made asymmetrical. The important thing is that it can be attached to the two shelf parts 40a, 40b and has such a construction that a locking device may be inserted into said fastening device along the entire track 43 which is arranged centrally between the shelf parts 40a, 40b. The geometrical shape of the central body 31 and the protrusions 32 of the fastening device 30 may of course be varied. What is aimed at is a good locking which is easily obtained by inserting the fastening device between the shelf parts 40a, 40b.

How the supplementary boards 44 are locked to the shelf parts 40 is also possible to vary in many different ways. For example locking devices at certain points may be arranged along the long sides, or some kind of device may be inserted between them so that they will be kept together, for example pins which can be locked.

The fastening device 30 may be divided in several parts along the track 43 between the two shelf parts 40 but this diminishes the flexibility of how the gable elements 20 may be placed. A fastening device which extends along the entire track 43 is therefore preferred in the current embodiment of the present invention.

The attachment frame 24 is a good and practical solution, but the locking between gable elements 20 and a shelf 10 may be achieved by using other locking modes than the current attachment frame. For example, the attachment frame may be a part of the central part 64 of the gable element 20. It is also conceivable with other devices which may be placed in the gable element 20 to achieve a locking-function.

It is possible to place means on the gable elements 20 so that boxes also can be arranged between gable elements.

The cover plate 62 which may be arranged to an attachment frame 24 may be provided with holes 63 in which suspension devices may be arranged serving as supports for intermediate shelves in a stand built according to the present invention. These intermediate shelves are then easy to raise and lower or remove.

The alternative with a shelf hanging in struts 71 may be varied. It is for example possible to arrange a modified strut which runs inside a gable element 20 and which modified strut passes a gable element vertically through the hole intended for the locking device 50. Through this arrangement, the modified strut may be totally hidden inside the gable element 20. This solution works very well considering that one part of the objective of this invention is that locking devices and the like are hidden inside gable elements and shelves. A clean and sober construction is thereby obtained. It is further conceivable to vary the way in which the shelf 10 rests in the embodiment where the strut 71 is visible. In the present embodiment, axes 73 are being used as supports for the shelves. In which way and on what the shelf 10 rests may of course be varied. A frame is for example conceivable, which extends along the entire shelf so that an even more stable arrangement is obtained.

Because the invention in itself is very flexible, it should be understood that depths, breadths and heights may be varied to obtain the desired stand. The shelves may also be fixed directly to one another side by side without needing to have a shelf gable in between. Where regular stands have been put together it means that two gables stand beside each other. Consequently, one has common gables to several shelves.

The design of the gauge block which i.a. shall compensate for differences in breadth and height, that may appear when you build overlapping in different levels, may also be varied in many ways. The size of the gauge block is, however, determined by the breadth and the height of the gable elements 20 and by the of the breadth and thickness of the shelf parts 40.

An advantage by using an attachment frame 24 is that the precision required for the locking is to be found in the attachment frame itself. The gable elements may then be lengthened as required without influencing the central locking, which is located in the attachment frame. The gables may therefore be produced in optimal lengths which is practical and proves to be most useful.

To increase further the flexibility of the present invention it is conceivable that for example adjustable legs may be provided below a stand construction. Thereby a stand may be obtained that almost totally covers a wall from floor to ceiling.

The gauge block is divided into central parts and side parts. How the locking is conducted between them mau be varied in many different ways. It is also conceivable to make a gauge block in one piece, should this be an advantage.

As one of the greatest advantages of the invention is that a minimum of tools has be used when mounting or dismounting the invention, the cover plate covering the attachment frame 24 may be pressed in to position without complicated locking devices.

## Claims

1. Stand (1) consisting of at least one shelf (10), divided into a first shelf part (40a) and a second shelf part (40b), wherein at least one fastening device (30) connects said shelf parts (40a, 40b) to form an even shelf (10) with a gap (43) between said shelf parts, which gap (43) is arranged to enable connection of a vertical stand part (20,13) to said shelf (10), **characterized in that** said fastening device (30) constitutes of an elongated unit extending along said gap (43), or of several parts extending along said gap (43), wherein said fastening device comprises a notch (33) which forms part of said gap (43).

2. Stand according to claim 1, **characterized in that** the fastening device (30) constitutes of an elongated profile element provided with locking means (32) which connect respective shelf part (40a, 40b) to the fastening device through corresponding notches (42) in each shelf part (40).

3. Stand according to any of the preceding claims, **characterized in that** the fastening device (30) is arranged, preferably without tools, to be inserted into said notch (42) whereby connection is achieved between the fastening device and the shelf parts.

4. Stand according to any of the preceding claims, **characterized in that** the gap (43) extends in the longitudinal direction of the shelf.

5. Stand according to any of the preceding claims, **characterized in that** said fastening device (30) is provided with an upwardly pointing notch (3 3 a) and a downwardly pointing notch (33b).

6. Stand according to any of the preceding claims, **characterized in that** the fastening device (30) is symmetric in respect to a horizontal plane and a vertical plane.

7. Stand according to any of the preceding claims, **characterized in that** said notch (33) is provided with means (38) for interaction with a locking device (50).

8. Stand according to claim 7, **characterized in that** said means constitutes of edge means (38) extending parallel with the gap (43).

9. Stand according to claim 8, **characterized in that** said stand element (20,13) in at least one end shows means (60,75,75a) for interaction with said locking device (50) arranged to connect said stand element (20) with the shelf.

10. Stand according to claim 9, **characterized in that** torque protection means (22) is connected to said stand element (20,13) and arranged to interact with said gap (43) so that a torque-proof connection is achieved between stand element (20,13) and the shelf (10).

11. Stand according to claim 10, **characterized in that** said torque protection means (22) constitutes of at least one pin-shaped means (22), preferably at least two.

12. Stand according to claim 9, **characterized in that** said locking device (50) comprises a rod-shaped part penetrating a notch (60) in said vertical stand element (20,13), wherein said stand element in the area of said notch (60) shows an abutment surface (76) which transfers an abutment force, which via a locking device (74) is placed on the rod-shaped part (50)

13. Stand according to claim 9, **characterized in that** said transverse stand element is a module element (64, 65, 66).

14. Stand according to claim 1, **characterized in that** at least one of said shelf part (40a, 40b) is provided with a first coupling (45) at one long side so that a supplementary board (44) may be arranged to said shelf part long side, whereby the breadth of said shelf may be varied.

15. Stand according to claim 9, **characterized in that** said locking device (50) is arranged to an attachment frame (24) intended to constitute a part of a stand element (20) in the form of a gable element.

16. Stand according to claim 15, **characterized in that** a gable element (20) constitutes of assembled element parts (64, 65, 66).

17. Stand according to claim 1, **characterized in that** a gauge block (70) may be arranged to the short side of a shelf, wherein said gauge block has a breadth (b) which preferably is the half the breadth of the gable element.

18. Stand system intended to be assembled into a stand (1), which stand system comprises at least a first shelf part (40a) and a second shelf part (40b), which shelf parts are adapted to be assembled to form a shelf (10) by means of a fastening device (30), which is designed to connect said parts (40a, 40b) in such a way that a gap (43) arises between said shelf parts, **characterized in that** said first and second shelf parts (40a, 40b) are provided with female means (42), that said fastening device (30) is provided with male means (32) adapted to said female means, and that said fastening device is provided with at least one notch (33) arranged to constitute a part of said gap (43).

19. Stand system according to claim 18, **characterized in that** the fastening device (30) consists of an elongated profile.

20. Stand system according to claim 18, **characterized in that** said female means (42) are arranged as longitudinal recesses (42).

21. Stand system according to any of the preceding claims, **characterized in that** said fastening device (30) is provided with a notch (33a) directed upwards and a notch (33b) directed downwards.

22. Stand system according to any of the preceding claims, **characterized in that** the fastening device (30) is symmetrically designed with respect to a horizontal plane and a vertical plane.

23. Stand system according to any of the preceding claims, **characterized in that** said notch (33) is provided with means (38) for interaction with a locking device (50).

24. Stand system according to claim 23, **characterized in that** said means consists of edge means (38).

25. Stand system according to claim 23 or 24, **characterized in that** it comprises a gable element (20,13) showing means (60, 75, 75a) for interaction with said locking device (50).

26. Stand system according to claim 25, **characterized in** torque protection means (22) intended to be arranged in said gable element.

27. Stand system according to claim 26, **characterized in that** said torque protection means (22) consists of at least one pin-shaped means (22), preferably at least two for each connection.

28. Stand system according to claim 25, **characterized in that** said locking device (50) comprises a rod-shaped part, and that said gable element in the area (75a) of a notch (60) has an abutment surface (76).

29. Stand system according to claim 25, **characterized in that** said gable element comprises a module element (64, 65, 66).

30. Stand system according to claim 18, **characterized in that** at least one of said shelf parts is provided with a first coupling (45) at a long side so that a supplementary board (44) may be arranged to the long side of said shelf part.

31. Stand system according to claim 25, **characterized in that** an attachment frame (24) is intended to form part of a vertical stand element (20) in the form of a gable element.

32. Stand system according to claim 18, **characterized in that** a gauge block (70) has a breadth (b) that preferably is half the breadth (t) of a gable element.

## Patentansprüche

1. Ständer (1), bestehend aus mindestens einer Platte (10), aufgeteilt in einen ersten Plattenteil (40a) und einen zweiten Plattenteil (40b), wobei mindestens eine Befestigungsvorrichtung (30) die Plattenteile (40a, 40b) verbindet, um eine flache Platte (10) mit einer Lücke (43) zwischen den Plattenteilen zu bilden, wobei die Lücke (43) so angeordnet ist, dass sie die Verbindung eines vertikalen Ständerteils (20, 13) mit der Platte (10) ermöglicht, **dadurch gekennzeichnet, dass** die Befestigungsvorrichtung (30) aus einer länglichen Einheit besteht, welche sich entlang der Lücke (43) erstreckt, oder aus mehreren Teilen, die sich entlang der Lücke (43) erstrecken, wobei die Befestigungsvorrichtung eine Kerbe (33) aufweist, die einen Teil der Lücke (43) bildet.

2. Ständer nach Anspruch 1, **dadurch gekennzeichnet, dass** die Befestigungsvorrichtung (30) aus einem gestreckten Profilelement besteht, welches mit Sicherungsmitteln (32) bereitgestellt wird, welches die entsprechenden Plattenteile (40a, 40b) mit der Befestigungsvorrichtung durch entsprechende Kerben (42) in jedem Plattenteil (40) verbindet.

3. Ständer nach einem der vorhergehenden Ansprüche, **dadurch gekennzeichnet, dass** die Befestigungsvorrichtung (30) derart angeordnet ist, um, vorzugsweise ohne Werkzeuge, in die Kerben (42) eingebracht zu werden, wodurch eine Verbindung zwischen der Befestigungsvorrichtung und den Plattenteilen erreicht wird.

4. Ständer nach einem der vorhergehenden Ansprüche, **dadurch gekennzeichnet, dass** die Lücke (43) sich in einer longitudinalen Richtung der Platte erstreckt.

5. Ständer nach einem der vorhergehenden Ansprüche, **dadurch gekennzeichnet, dass** die Befestigungsvorrichtung (30) mit einer aufwärts gerichteten Kerbe (33a) und einer abwärts gerichteten Kerbe (33b) bereitgestellt wird.

6. Ständer nach einem der vorhergehenden Ansprüche, **dadurch gekennzeichnet, dass** die Befestigungsvorrichtung (30) symmetrisch in Bezug auf eine horizontale und eine vertikale Ebene ist.

7. Ständer nach einem der vorhergehenden Ansprüche, **dadurch gekennzeichnet, dass** die Kerbe (33) mit Mitteln (38) zum Zusammenwirken mit einem Sicherungsmittel (50) bereitgestellt wird.

8. Ständer nach Anspruch 7, **dadurch gekennzeichnet, dass** die Mittel aus Kantenmittel (38) bestehen, die sich parallel zu der Lücke (43) erstrecken.

9. Ständer nach Anspruch 8, **dadurch gekennzeichnet, dass** die Ständerelemente (20, 13) an mindestens einem Ende Mittel (60, 75, 75a) zum Zusammenwirken mit der Sicherungsvorrichtung (50) zeigen, angeordnet das Ständerelement (20) mit der Platte zu verbinden.

10. Ständer nach Anspruch 9, **dadurch gekennzeichnet, dass** Verdrillungsschutzmittel (22) mit dem Ständerelement (20, 13) verbunden sind und derart angeordnet sind, um mit der Lücke (43) zusammen zu wirken, so dass eine verdrillungssichere Verbindung zwischen dem Ständerelement (20, 13) und der Platte (10) erreicht wird.

11. Ständer nach Anspruch 10, **dadurch gekennzeichnet, dass** die Verdrillungsschutzmittel (22) aus mindestens einem Stift-förmigen Mittel (22) bestehen, vorzugsweise aus mindestens zwei.

12. Ständer nach Anspruch 9, **dadurch gekennzeichnet, dass** die Sicherungsvorrichtung (50) einen Stab-förmigen Teil umfasst, welcher in eine Kerbe (60) in dem vertikalen Ständerelement (20, 13) eindringt, wobei das Ständerelement in dem Gebiet von der Kerbe (60) eine Angrenzungsfläche (76) zeigt, welche eine Angrenzungskraft überträgt, welche über eine Sicherungsvorrichtung (74) an einen Stab-förmigen Teil (50) angelegt ist.

13. Ständer nach Anspruch 9, **dadurch gekennzeichnet, dass** das transversale Ständerelement ein Modulelement (64, 65, 66) ist.

14. Ständer nach Anspruch 1, **dadurch gekennzeichnet, dass** mindestens einer der Plattenteile (40a, 40b) mit einer ersten Kopplung (45) an der langen Seite bereitgestellt wird, so dass ein zusätzliches Bord (44) an der Plattenteil-Längsseite angeordnet werden kann, wodurch die Breite der Platte variiert werden kann.

15. Ständer nach Anspruch 9, **dadurch gekennzeichnet, dass** die Sicherungsvorrichtung (50) an einem Anfügerahmen (24) angeordnet ist, welcher dafür vorgesehen ist, aus einen Teil eines Ständerelements (20) in der Form eines Giebelelements, zu bestehen.

16. Ständer nach Anspruch 15, **dadurch gekennzeichnet, dass** ein Giebelelement (20) aus montierten Elementteilen (64, 65, 66) besteht.

17. Ständer nach Anspruch 1, **dadurch gekennzeichnet, dass** ein Messldotz (70) an der kurzen Seite der Platte angeordnet werden kann, wobei der Messklotz eine Breite (b) aufweist, welche vorzugsweise die Hälfte der Breite des Giebelelements ist.

18. Ständersystem, welches dafür vorgesehen ist, zu einem Ständer (1) montiert zu werden, wobei das Ständersystem mindestens einen ersten Plattenteil (40a) und einen zweiten Plattenteil (40b) aufweist, wobei die Plattenteile geeignet sind, moniert zu werden, um eine Platte (10) mittels einer Befestigungsvorrichtung (30) zu bilden, welche gestaltet ist, um die Teile (40a, 40b) derart zu verbinden, dass eine Lücke (43) zwischen den Plattenteilen entsteht, **dadurch gekennzeichnet, dass** die ersten und zweiten Plattenteile (40a, 40b) mit Aufnahmemitteln (42) bereitgestellt werden, dass die Befestigungsvorrichtung (30) mit Steckmittel (32) bereitgestellt werden, welche an die Aufnahmemittel (42) angepasst sind, und dass die Befestigungsvorrichtung mit mindestens einer Kerbe (33) bereitgestellt wird, welche derart angeordnet ist, um einen Teil der Lücke (43) zu bilden.

19. Ständersystem nach Anspruch 18, **dadurch gekennzeichnet, dass** die Befestigungsvorrichtung (30) aus einem gestreckten Profil besteht.

20. Ständersystem nach Anspruch 18, **dadurch gekennzeichnet, dass** die Aufnahmemittel (42) als longitudinale Aussparungen (42) angeordnet sind.

21. Ständersystem nach einem der vorhergehenden Ansprüche, **dadurch gekennzeichnet, dass** die Befestigungsvorrichtung (30) mit einer aufwärts gerichteten Kerbe (33a) und einer abwärts gerichteten Kerbe (33b) bereitgestellt wird.

22. Ständersystem nach einem der vorhergehenden Ansprüche, **dadurch gekennzeichnet, dass** die Befestigungsvorrichtung (30) symmetrisch in Bezug auf eine horizontale und eine vertikale Ebene gestaltet ist.

23. Ständersystem nach einem der vorhergehenden Ansprüche, **dadurch gekennzeichnet, dass** die Kerbe (33) mit Mitteln (38) zum Zusammenwirken mit einem Sicherungsmittel (50) bereitgestellt wird.

24. Ständersystem nach Anspruch 23, **dadurch gekennzeichnet, dass** die Mittel aus Kantenmitteln (38) bestehen.

25. Ständersystem nach Anspruch 23 oder 24, **dadurch gekennzeichnet, dass** es ein Giebelelemente (20, 13) umfasst, welches Mittel (60, 75, 75a) zum Zusammenwirken mit der Sicherungsvorrichtung (50) zeigt.

26. Ständersystem nach Anspruch 25, **gekennzeichnet durch** Verdrillungsschutzmittel (22), welche dafür vorgesehen sind, in dem Giebelelement angeordnet zu werden.

27. Ständersystem nach Anspruch 26, **dadurch gekennzeichnet, dass** das Verdrillungsschutzmittel (22) aus mindestens einem Stift-förmigen Mittel (22) besteht, vorzugsweise aus mindestens zwei für jede Verbindung.

28. Ständersystem nach Anspruch 25, **dadurch gekennzeichnet, dass** die Sicherungsvorrichtung (50) einen Stab-förmigen Teil umfasst und dass das Giebelelement in dem Gebiet (75a) einer Kerbe (60) eine Angrenzungsfläche (76) aufweist.

29. Ständersystem nach Anspruch 25, **dadurch gekennzeichnet, dass** das Giebelelement ein Modulelement (64, 65, 66) umfasst.

30. Ständersystem nach Anspruch 18, **dadurch gekennzeichnet, dass** mindestens einer der Plattenteile mit einer ersten Kopplung (45) an der langen Seite bereitgestellt wird, so dass ein zusätzliches Bord (44) an der Längsseite des Plattenteils angeordnet werden kann.

31. Ständersystem nach Anspruch 25, **dadurch gekennzeichnet, dass** ein Anfügerahmen (24) dafür vorgesehen ist, einen Teil eines vertikalen Ständerelements (20) in der Form eines Giebelelements zu bilden.

32. Ständersystem nach Anspruch 18, **dadurch gekennzeichnet, dass** ein Messklotz (70) eine Breite (b) aufweist, welche vorzugsweise die Hälfte der Breite (t) des Giebelelement ist.

## Revendications

1. Meuble (1) se composant d'au moins une étagère (10), divisée en une première partie d'étagère (40a) et une deuxième partie d'étagère (40b), dans lequel au moins un dispositif de fixation (30) relie lesdites parties d'étagère (40a, 40b) pour former une étagère uniforme (10) avec un espace (43) compris entre lesdites parties d'étagère, lequel espace (43) est agencé pour permettre la liaison d'une partie verticale du meuble (20, 13) à ladite étagère (10), **caractérisé en ce que** ledit dispositif de fixation (30) est constitué d'une unité allongée s'étendant le long dudit espace (43), ou de plusieurs parties s'étendant le long dudit espace (43), dans lequel ledit dispositif de fixation comprend une encoche (33) faisant partie dudit espace (43).

2. Meuble selon la revendication 1, **caractérisé en ce que** le dispositif de fixation (30) est constitué d'un élément profilé allongé équipé de moyens de verrouillage (32) qui relient chaque partie d'étagère respective (40a, 40b) au dispositif de fixation par l'intermédiaire d'encoches correspondantes (42) aménagées dans chaque partie d'étagère (40).

3. Meuble selon l'une quelconque des revendications précédentes, **caractérisé en ce que** le dispositif de fixation (30) est agencé pour être inséré, de préférence sans outils, dans ladite encoche (42) de telle sorte que la liaison est réalisée entre le dispositif de fixation et les parties d'étagère.

4. Meuble selon l'une quelconque des revendications précédentes, **caractérisé en ce que** l'espace (43) s'étend dans la direction longitudinale de l'étagère.

5. Meuble selon l'une quelconque des revendications précédentes, **caractérisé en ce que** ledit dispositif de fixation (30) est équipé d'une encoche orientée vers le haut (33a) et d'une encoche orientée vers le bas (33b).

6. Meuble selon l'une quelconque des revendications précédentes, **caractérisé en ce que** le dispositif de fixation (30) est symétrique par rapport à un plan horizontal et un plan vertical.

7. Meuble selon l'une quelconque des revendications précédentes, **caractérisé en ce que** ladite encoche (33) est équipée de moyens (38) pour interagir avec un dispositif de verrouillage (50).

8. Meuble selon la revendication 7, **caractérisé en ce que** lesdits moyens sont constitués de moyens de bordures (38) s'étendant de manière parallèle à l'espace (43).

9. Meuble selon la revendication 8, **caractérisé en ce que** ledit élément de meuble (20, 13) comprend, à au moins une extrémité, des moyens (60, 75, 75a) pour interagir avec ledit dispositif de verrouillage (50) agencé pour relier ledit élément de meuble (20) à l'étagère.

10. Meuble selon la revendication 9, **caractérisé en ce que** des moyens de limitation de couple (22) sont reliés audit élément de meuble (20, 13) et sont agencés pour interagir avec ledit espace (43) de sorte qu'une liaison à limitation de couple est réalisée entre l'élément de meuble (20, 13) et l'étagère (10).

11. Meuble selon la revendication 10, **caractérisé en ce que** lesdits moyens de limitation de couple (22) sont constitués d'au moins un moyen en forme de goupille (22), de préférence d'au moins deux de ces moyens.

12. Meuble selon la revendication 9, **caractérisé en ce que** ledit dispositif de verrouillage (50) comprend une partie en forme de tige venant en engagement dans une encoche (60) dans ledit élément vertical de meuble (20, 13), de sorte que ledit élément de meuble, dans la zone de ladite encoche (60), comprend une surface de butée (76) qui permet de transférer une force de butée sur la partie en forme de tige (50) par l'intermédiaire d'un dispositif de verrouillage (74).

13. Meuble selon la revendication 9, **caractérisé en ce que** ledit élément transversal de meuble est un élément formant module (64, 65, 66).

14. Meuble selon la revendication 1, **caractérisé en ce qu'**au moins une desdites parties d'étagère (40a, 40b) est équipée d'un premier élément de liaison (45) sur un côté allongé de sorte qu'un panneau supplémentaire (44) puisse être agencé sur ledit long côté de ladite partie d'étagère, de sorte que la largeur de ladite étagère peut être modifiée.

15. Meuble selon la revendication 9, **caractérisé en ce que** ledit dispositif de verrouillage (50) est agencé sur une armature de liaison (24) destinée à constituer une partie d'un élément de meuble (20) sous la forme d'un élément formant pignon.

16. Meuble selon la revendication 15, **caractérisé en ce qu'**un élément formant pignon (20) est constitué de parties d'élément assemblées (64, 65, 66).

17. Meuble selon la revendication 1, **caractérisé en ce qu'**une cale d'écartement (70) peut être agencée sur le côté court d'une étagère, cette cale d'écartement ayant une largeur (b) qui est de préférence égale à la moitié de la largeur de l'élément formant pignon.

18. Système de meuble destiné à être assemblé pour former un meuble (1), lequel système de meuble comprend au moins une première partie d'étagère (40a) et une deuxième partie d'étagère (40b), lesquelles parties d'étagère sont adaptées pour être assemblées pour former une étagère (10) au moyen d'un dispositif de fixation (30), qui est conçu pour relier lesdites parties (40a, 40b) de telle manière qu'un espace (43) soit formé entre lesdites parties d'étagère, **caractérisé en ce que** lesdites premières et deuxièmes parties d'étagère (40a, 40b) sont équipées de moyens femelles (42), **en ce que** ledit dispositif de fixation (30) est équipé de moyens mâles (32) adaptés auxdits moyens femelles, et **en ce que** ledit dispositif de fixation est équipé d'au moins une encoche (33) agencée pour constituer une partie dudit espace (43).

19. Système de meuble selon la revendication 18, **caractérisé en ce que** le dispositif de fixation (30) se compose d'un profilé allongé.

20. Système de meuble selon la revendication 18, **caractérisé en ce que** lesdits moyens femelles (42) sont agencés sous forme de cavités longitudinales (42).

21. Système de meuble selon l'une quelconque des revendications précédentes, **caractérisé en ce que** ledit dispositif de fixation (30) est équipé d'une encoche (33a) orientée vers le haut et d'une encoche (33b) orientée vers le bas.

22. Système de meuble selon l'une quelconque des revendications précédentes, **caractérisé en ce que** le dispositif de fixation (30) est conçu de manière symétrique par rapport à un plan horizontal et à un plan vertical.

23. Système de meuble selon l'une quelconque des revendications précédentes, **caractérisé en ce que** ladite encoche (33) est équipée de moyens (38) pour interagir avec un dispositif de verrouillage (50).

24. Système de meuble selon la revendication 23, **caractérisé en ce que** ledit moyen se compose de moyens de bordure (38).

25. Système de meuble selon la revendication 23 ou 24, **caractérisé en ce qu'**il comprend un élément formant pignon (20, 13) comprenant des moyens (60, 75, 75a) pour interagir avec ledit dispositif de verrouillage (50).

26. Système de meuble selon la revendication 25, **caractérisé en ce que** des moyens de limitation de couple (22) sont destinés à être agencés dans ledit élément formant pignon.

27. Système de meuble selon la revendication 26, **caractérisé en ce que** lesdits moyens de limitation du couple (22) se composent d'au moins un moyen en forme de goupille (22), de préférence d'au moins deux de ces moyens pour chaque liaison.

28. Système de meuble selon la revendication 25, **caractérisé en ce que** ledit dispositif de verrouillage (50) comprend une partie en forme de tige, et **en ce que** ledit élément formant pignon dans la zone (75a) d'une encoche (60) comprend une surface de butée (76).

29. Système de meuble selon la revendication 25, **caractérisé en ce que** ledit élément formant pignon comprend un élément formant module (64, 65, 66).

30. Système de meuble selon la revendication 18, **caractérisé en ce qu'**au moins une desdites parties d'étagère est équipée d'un premier élément de liaison (45) sur un côté long de sorte qu'un panneau supplémentaire (44) peut être agencé sur le long côté de ladite partie d'étagère.

31. Système de meuble selon la revendication 25, **caractérisé en ce qu'**une armature de liaison (24) est destinée à former une partie d'un élément de meuble vertical (20) sous la forme d'un élément formant pignon.

32. Système de meuble selon la revendication 18, **caractérisé en ce qu'**une cale d'écartement (70) a une largeur (b) qui est de préférence égale à la moitié de la largeur (t) d'un élément formant pignon.
